# EUROPÄISCHE PATENTSCHRIFT

(11) **EP 1 277 997 B1**
(45) Veröffentlichungstag und Bekanntmachung des Hinweises auf die Patenterteilung: **02.08.2006**
(21) Anmeldenummer: 02013056.3
(22) Anmeldetag: 13.06.2002
(51) Int. Cl.: F16K 11/22, E03C 1/02

(54) **Umstellvorrichtung für eine Sanitäreinrichtung mit mindestens zwei Wasserverbrauchern**
Switching device for a sanitary device with at least two water supplies
Dispositif de commutation d'un dispositif sanitaire avec au moins deux dispositifs d'alimentation d'eau

(30) Priorität: 20.07.2001 DE 10135555
(43) Veröffentlichungstag der Anmeldung: 22.01.2003
(73) Patentinhaber: HANSA METALLWERKE AG, 70567 Stuttgart (DE)
(72) Erfinder: Cordes, Dieter, 41334 Nettetal (DE)
(74) Vertreter: Ostertag, Ulrich

(56) Entgegenhaltungen:
- DE-U- 8 521 603
- US-A- 1 647 983
- US-A- 2 080 924
- US-A- 3 894 719
- US-A- 5 226 451
- US-A- 5 901 745

## Beschreibung

Die Erfindung betrifft eine Umstellvorrichtung für eine Sanitäreinrichtung mit mindestens zwei Wasserverbrauchern, insbesondere für eine Duscheinrichtung mit mindestens zwei Duschköpfen, mit den Merkmalen des Oberbegriffs des Anspruchs 1.

Ein derartige Umstellvorrichtung ist aus der Druchschrift US 5901745 bekannt.

Mit zunehmenden Ansprüchen an den Komfort sanitärer Einrichtungen, insbesondere von Brauseeinrichtungen, steigt die Anzahl von Wasserverbrauchern, die von dem selben Mengen- und/oder Mischventil gespeist werden sollen und zwischen denen der Benutzer wählen kann. Ein typisches Beispiel sind Brausekabinen, in denen nicht mehr, wie früher üblich, eine Kopf- und eine Handbrause anzutreffen sind, sondern in der zusätzlich mehrere Seitenbrausen angeordnet sind, mit deren Hilfe der Körper auch von der Seite her besprüht werden kann. Hier stellt sich die Problematik, daß einerseits die Auswahl der Wasserverbraucher dem Benutzer möglichst freigestellt werden soll, wobei auch die Möglichkeit bestehen muß, mehrere Wasserverbraucher gleichzeit zu benutzen, daß aber andererseits konstruktiv dafür Sorge getragen werden muß, daß bestimmte dieser Wasserverbraucher nicht gleichzeitig betätigt werden können. Ein Beispiel hierfür in der oben erwähnten Brausekabine ist, daß die Handbrause möglichst nicht gleichzeitig mit den anderen Brauseköpfen aktiv sein sollte.

Ein Umstellvorrichtung der eingangs genannten Art ist in der WO 98/02077 A1 beschrieben. Hier besteht die Ventileinrichtung, welche für die Überleitung des zuströmenden Wassers zu einem der Wasserverbraucher sorgt, aus einer verdrehbaren Keramikscheibe, die eine Wasserdurchtrittsöffnung aufweist und gegenüber einer stationären Keramikscheibe verdrehbar ist, in der für jeden Wasserverbraucher eine Durchtrittsöffnung vorgesehen ist. Die Drehstellung der drehbaren Keramikscheibe bestimmt also, welcher Wasserverbraucher gerade aktiviert ist. Diese Art Ventileinrichtung ist in ihrer Bedienung verhältnismäßig unübersichtlich. Dies gilt insbesondere dann, wenn mehrere Verbraucher gleichzeitig eingeschaltet werden sollen, wozu die drehbare Keramikscheibe in eine Position gebracht werden muß, bei der sie mehrere Durchtrittsöffnungen der stationären Keramikscheibe überlappt. Steigt die Zahl der Wasserverbraucher über drei, so lassen sich bei dieser Konstruktion nicht mehr alle Wasserverbraucher gleichzeitig einschalten; die Abmessungen der Keramikscheiben steigen in einer nicht hinnehmbaren Weise an, wenn für jede Wasserdurchtrittsöffnung ein bestimmter Mindestquerschnitt eingehalten wird.

Umstellvorrichtungen für Brauseeinrichtungen, die in der oben geschilderten Weise mehrere Brauseköpfe aufweisen, sind auch in der US 3 984 879 A und der EP 0 379 035 A1 angesprochen, dort aber in ihrer Bauweise nicht näher beschrieben.

Aufgabe der vorliegenden Erfindung ist es, eine Umstellvorrichtung der eingangs genannten Art so auszugestalten, daß die Bedienung übersichtlich ist, die Bauweise grundsätzlich für eine unbeschränkte Anzahl von Wasserverbrauchern geeignet ist und gleichwohl dafür sorgt, daß bestimmte Wasserverbraucher gleichzeitig, andere dagegen nicht gleichzeitig eingeschaltet werden können.

Diese Aufgabe wird erfindungsgemäß dadurch gelöst, daß
d) ein Steuerkörper vorgesehen ist, der sich entlang aller Absperrventile erstreckt und eine Anzahl von Ausnehmungen aufweist, die der Anzahl der Absperrventile entspricht;
e) jedes Absperrventil einen gemeinsam mit dem Ventilkörper bewegbaren Vorsprung aufweist, der in eine Ausnehmung des Steuerkörpers eingreift,
   wobei
f) die Form der Ausnehmungen in dem Steuerkörper so gewählt ist, daß mindestens eines der Absperrventile nur dann geöffnet werden kann, wenn mindestens ein anderes der Absperrventile geschlossen ist.

Erfindungsgemäß wird also das im Stand der Technik vorgezeichnete Konstruktionsprinzip des klassischen Mehrwegeventils verlassen, bei dem ein einziger Ventilkörper eine Vielzahl von Stellungen einnehmen kann, in denen er jeweils die Verbindung zu einem der verschiedenen. Wasserverbraucher herstellt. Vielmehr wird jeder Wasserverbraucher durch ein gesondertes Absperrventil mit dem Einlaß der Umstellvorrichtung verbunden. Dadurch ist es zunächst einmal möglich, alle Wasserverbraucher durch Betätigung des entsprechenden Absperrventils unabhängig von allen anderen Wasserverbrauchern mit Wasser zu versorgen. Da damit aber die eingangs gestellte Aufgabe noch nicht gelöst ist, nach der bestimmte Öffnungszustände der Umstellvorrichtung nicht zulässig sein sollen, ist erfindungsgemäß der besondere Steuerkörper vorgesehen, in dessen Ausnehmungen sich beim Öffnen des jeweiligen Absperrventils bewegende Vorsprünge hineinragen. Durch eine geeignete Wahl der Ausnehmungsform kann dann gewährleistet werden, daß Öffnungsbewegungen bestimmter Ventilkörper nur dann möglich sind, wenn andere Ventilkörper sich in einer bestimmten Position befinden.

Ein Beispiel dafür, wie die Ausnehmungen gestaltet werden können, ist im Anspruch 2 angegeben. Wenn nämlich die Ventilkörper eine lineare Bewegung durchführen, kann mindestens eine Ausnehmung des Steuerkörpers die Form eines rechtwinkligen Dreiecks aufweisen, dessen eine Kathete parallel zur Bewegungsrichtung der Ventilkörper verläuft, wobei mindestens eine andere Ausnehmung des Steuerkörpers geradlinig ist und sich unter einem Winkel zur Bewegungsrichtung der Ventilkörper erstreckt. Dasjenige Absperrventil, dem die geradlinige, schräg verlaufende Ausnehmung zugeordnet ist, muß in diesem Fall geschlossen sein, wenn die anderen Ventilkörper in die Offenstellung gebracht werden sollen.

Vorzugsweise wird jedes Absperrventil durch eine Betätigungswippe betätigt. Für den Benutzer bedeutet dies, daß er zum Öffnen und Schließen der Absperrventile getrennte Betätigungsorgane, z. B. Drucktasten, zur Verfügung hat, was erneut der Übersichtlichkeit der Bedienung dient.

Vorzugsweise ist der Innenraum des Gehäuses durch einen Einsatz, in dem die Ventilsitze ausgebildet sind, in einen stromauf von den Ventilsitzen liegenden, mit dem Einlaß des Gehäuses kommunizierenden Wasserraum und eine Mehrzahl von stromab von den Venilsitzen liegenden Wasserwegen unterteilt, die jeweils mit einem Auslaß des Gehäuses kommunizieren.

Schließlich empfiehlt sich, daß ein Überdruckventil vorgesehen ist, welches den stromauf von den Ventilsitzen liegenden Wasserraum mit einem der stromab liegenden Wasserwege verbindet, wenn der Druck in dem Wasserraum einen bestimmten Wert überschreitet. Grundsätzlich ist es nämlich bei der erfindungsgemäßen Umstellvorrichtung möglich, alle Absperrventile zu schließen und somit alle Wasserverbraucher abzustellen, ohne das vorgeschaltete Mengenventil, aus dem die Umstellvorrichtung gespeist wird, zu schließen. Unter ungünstigen Umständen könnte sich in einem solchen Fall in der Umstellvorrichtung ein so großer Druck aufbauen, daß Beschädigungen drohen. Dies wird durch das Überdruckventil verhindert. Bei Brauseeinrichtungen erfolgt der Abbau des Überdrucks vorzugsweise in denjenigen Wasserweg, der zur Handbrause führt. Das vom Überdruckventil durchgelassene Wasser fließt dann über die Handbrause ab.

Wenn einer der Wasserverbraucher eine Handbrause ist, ist es vorteilhaft, wenn der den Wasserfluß zur Handbrause steuernde Ventilkörper durch eine Feder in die Offenstellung gedrückt wird. Auf diese Weise entsteht eine Vorzugsstellung der Umstellvorrichtung, bei welcher der Wasserweg zur Handbrause geöffnet und im allgemeinen alle anderen Wasserwege geschlossen sind.

Ein Ausführungsbeispiel wird nachfolgend anhand der Zeichnung näher erläutert; es zeigen
- Figur 1: eine Draufsicht auf eine Umstellvorrichtung für eine Brauseeinrichtung;
- Figur 2: die perspektivische Ansicht der geöffneten Umstellvorrichtung von Figur 1;
- Figur 3: einen Schnitt durch die Umstellvorrichtung von Figur 1 gemäß der dortigen Linie III-III;
- Figur 4: einen Schnitt durch die Umstellvorrichtung von Figur 1 gemäß der dortigen Linie IV-IV;
- Figur 5: in größerem Maßstab eine perspektivische Ansicht der Betätigungsvorrichtung für drei Ventile, die in der Umstellvorrichtung der Figur 1 enthalten sind.

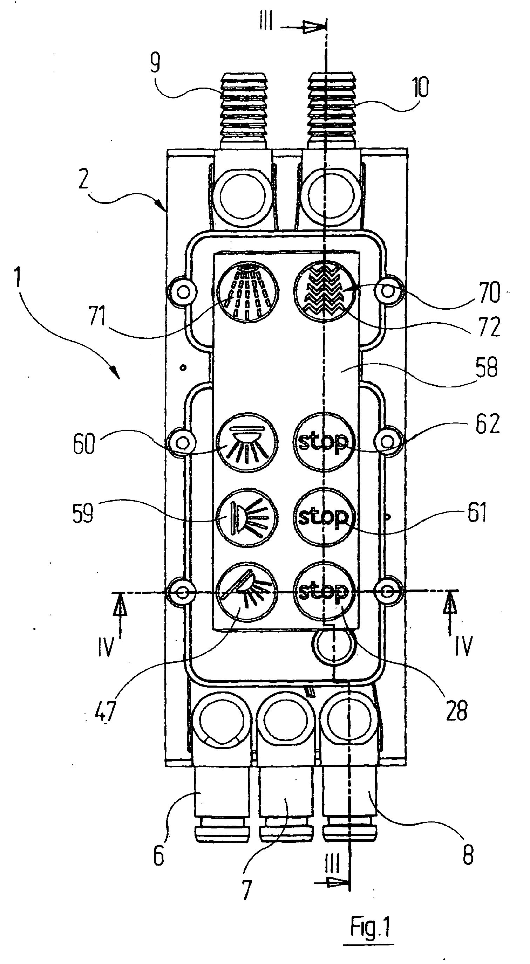

Die in den Figuren 1 bis 4 dargestellte Umstellvorrichtung 1 ist zum Einsatz in einer Brausekabine gedacht, in der sich neben der üblichen Handbrause und Kopfbrause eine Mehrzahl von Seitenbrausen befindet. Die Umstellvorrichtung 1 dient dazu, das von einem nicht dargestellten Mengen- und/oder Mischventil kommende Wasser auf eine oder eine Mehrzahl dieser Brausen zu leiten. Dabei ist, wie weiter unten näher beschrieben ist, Vorkehrung dafür getroffen, daß die Handbrause nur dann in Benutzung genommen werden kann, wenn die Wege zu den anderen Verbrauchern (Kopf- und Seitenbrausen) geschlossen sind.

Die Umstellvorrichtung 1 umfaßt ein Gehäuse 2, welches aus einer Grundplatte 3, einem unteren Einsatz 4 und einem oberen Einsatz 5 zusammengesetzt ist.

An gegenüberliegenden Enden des unteren Einsatzes 4 sind insgesamt fünf Anschlußnippel 6, 7, 8, 9, 10 ausgebildet. Der Anschlußnippel 6 dient zum Anschluß einer das Wasser zuführenden Leitung, die mit dem oben schon erwähnten Mengen- und/oder Mischventil verbunden ist. Der mittlere Anschluß 7 am in Figur 1 unteren Ende der Umstellvorrichtung 1 dient zum Anschluß der Seitenbrausen, der rechte Anschlußnippel 8 am unteren Ende der Umstellvorrichtung 1 dem Anschluß der Handbrause, während die beiden oberen Anschlußnippel 9, 10 dem Anschluß zweier mit unterschiedlichen Strahlarten arbeitender Kopfbrausen (z. B. Nadelstrahl oder Schwallstrahl) dienen.

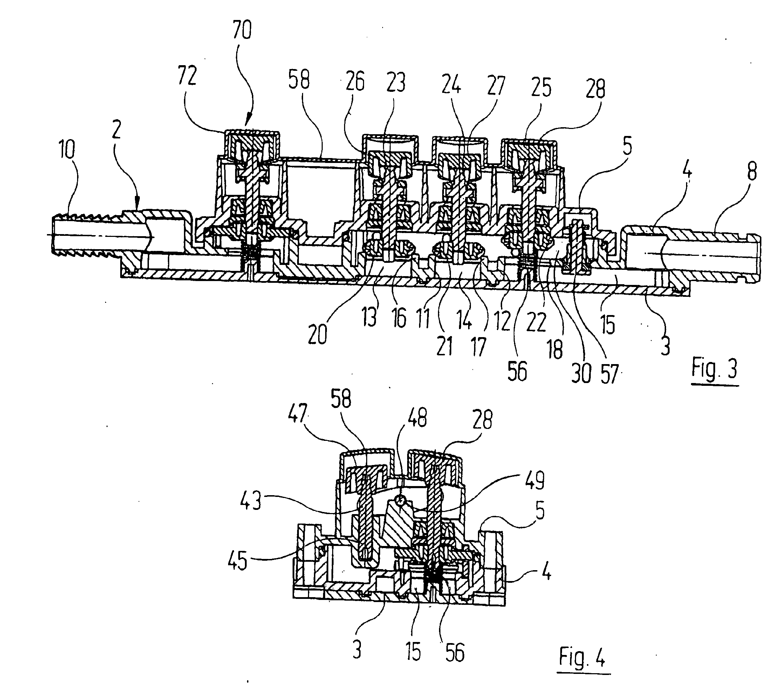

Der untere Einsatz 4 ist an seiner Unterseite mit Zwischenwänden 11, 12 versehen (vgl. Figur 3), welche auf der Oberseite der Grundplatte 3 aufstehen und den Zwischenraum zwischen der Grundplatte 3 und dem unteren Einsatz 4 in drei Wasserwege 13, 14, 15 aufteilen. Der Wasserweg 13 beginnt an einem in dem unteren Einsatz 4 ausgebildeten Ventilsitz 16 und führt in hier nicht näher dargestellter Weise zu einem Umstellventil 70, mit welchem die Betriebsart der Kopfbrause gewählt werden kann und das wahlweise eine Verbindung mit einem der beiden Anschlußnippel 9, 10 herstellt. Die genaue Bauweise dieses Umstellventils 70 wird hier nicht näher erläutert, da sie für das Verständnis der vorliegenden Erfindung irrelevant ist.

Der zweite Wasserweg 14 der Umstellvorrichtung 1 beginnt an einem Ventilsitz 17 in dem unteren Einsatz 4 und endet an dem Anschlußnippel 7, der zu den Seitenbrausen führt. Ein dritter Ventilsitz 18 schließlich in dem unteren Einsatz 4 kommuniziert, wie der Figur 3 zu entnehmen ist, mit dem Anschlußnippel 8, welcher seinerseits mit der Handbrause verbunden ist.

Die Ventilsitze 16, 17, 18 des unteren Einsatzes 4 arbeiten jeweils mit einem Ventilteller 20, 21, 22 zusammen. Diese Ventilteller 20, 21, 22 sitzen jeweils am unteren Ende eines Ventilschafts 23, 24, 25, welche in der in den Figuren 3 und 4 dargestellten Weise gedichtet durch Öffnungen des oberen Einsatzes 5 hindurchgeführt sind und an ihrem oberen Ende jeweils eine Drucktaste 26, 27, 28 tragen.

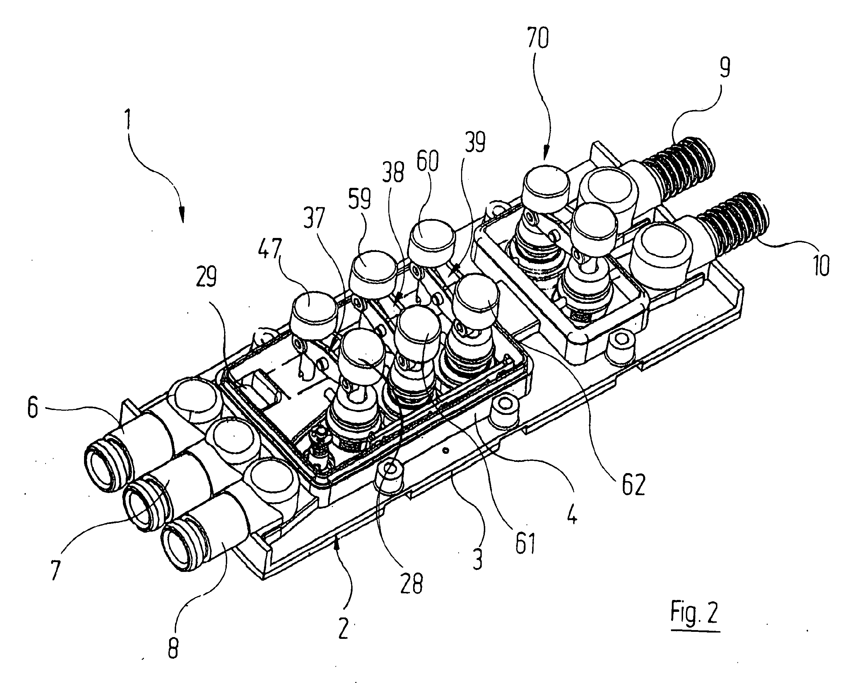

Der Anschlußnippel 6, über welchen das Wasser zufließt, steht über eine Öffnung 29 im unteren Einsatz 4 (vgl. Figur 2) mit dem Wasserraum 30 in Verbindung, der zwischen dem oberen Einsatz 5 und dem unteren Einsatz 4 liegt.

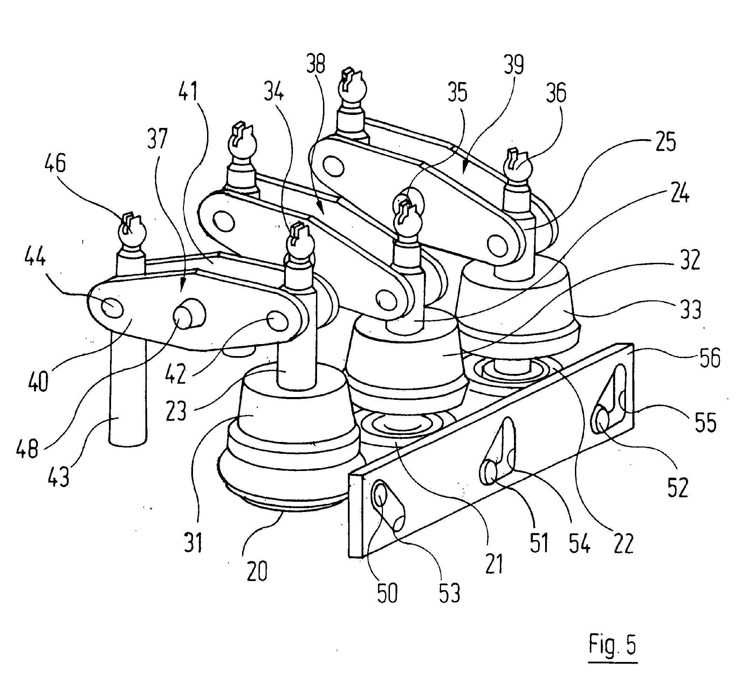

Die Ventilteller 20, 21, 22 werden durch einen Betätigungsmechanismus zwischen der Schließstellung, in der sie an dem entsprechenden Ventilsitz 16, 17, 18 anliegen, und einer Offenstellung, in der sie von diesem Ventilsitz 16, 17, 18 abgehoben sind, hin und her bewegt, der in Figur 5 in vergrößertem Maßstab herausgezeichnet ist. In dieser Figur sind alle zum Verständnis nicht notwendigen Komponenten weggelassen. Zu erkennen sind die drei Ventilteller 20, 21, 22, wobei der Ventilteller 20 in seiner angehobenen Position, die Ventilteller 21, 22 dagegen in ihren abgesenkten Positionen gezeichnet sind. Dargestellt und mit den Bezugszeichen 31, 32, 33 versehen sind ferner die Dichtungen, mit denen die Ventilschäfte 23, 24, 25 durch den in dieser Figur nicht gezeigten oberen Einsatz 5 hindurchgeführt sind. Auf die oberen, runden Köpfe 34, 35, 36 der Ventilschäfte 23, 24, 25 sind die Drucktasten 26, 27, 28, die oben anhand der Figuren 3 und 4 schon beschrieben wurden, aufgesetzt zu denken.

Jedem Ventilteller 20, 21, 22 ist eine Betätigungswippe 37, 38, 39 zugeordnet, die untereinander identisch sind und von denen daher nur die in Figur 5 vordere Betätigungswippe 37 nachfolgend näher beschrieben wird.

Die Betätigungswippe 37 umfaßt zwei identische Wippenglieder 40, 41, die von gegenüberliegenden Seiten her an den Ventilschaft 23 angelegt und an diesem mittels eines Gelenkzapfens 42 angelenkt sind. Am anderen Ende sind die Wippenelemente 41 von gegenüberliegenden Seiten her an einen Führungsschaft 43 angelegt und an diesem mittels eines Gelenkzapfens 44 angelenkt. Der Führungsschaft 43 ist, wie aus Figur 4 hervorgeht, in eine Führungsbohrung 45 des oberen Einsatzes 5 eingeführt und in dieser axial verschiebbar. Auf den oberen, abgerundeten Kopf 46 des Führungsschafts 43 ist in fertig montiertem Zustand, der in Figur 4 dargestellt ist, eine Drucktaste 47 aufgesetzt, die in den Figuren 1 und 4 dargestellt ist.

An die beiden Wippenglieder 41 ist jeweils im mittleren Bereich ein zylindrischer Lagervorsprung 48 angeformt, der, wie aus Figur 4 hervorgeht, in einer halbzylindrischen Nut 49 an der Oberseite des oberen Einsatzes 5 einliegt.

An die Mantelflächen der Ventilteller 20, 21, 22 ist jeweils ein radial vorstehender, im Querschnitt kreisrunder Zapfen 50, 51, 52 angesetzt. Diese Zapfen 50, 51, 52 greifen in jeweils eine Ausnehmung 53, 54 bzw. 55 einer Steuerleiste 56 ein, die sich entlang der drei Ventilteller 20, 21, 22, erstreckt. Die vertikale Abmessung aller dieser drei Ausnehmungen 53, 54, 55 entspricht dem Hub, den die Ventilteller 20, 21, 22 ausführen können.

Die Ausnehmung 53 ist im wesentlichen geradlinig und steht unter einem Winkel von etwa 45° zur Horizontalen. Die Ausnehmungen 54, 55 dagegen sind als gleichschenklige, rechtwinklige Dreiecke gestaltet, wobei eine der Katheten dieser Dreiecke horizontal, untenliegend, verläuft und sich die andere Kathete von der ersten Kathete vertikal nach oben erstreckt.

Auf die Funktionsweise des oben beschriebenen Betätigungsmechanismus und der diesem zugeordneten Steuerleiste 56 wird weiter unten näher eingegangen.

Wie den Figuren 3 und 4 zu entnehmen ist, wird der Ventilteller 22, welcher den zur Handbrause strömenden Wasserfluß steuert, durch eine Druckfeder 56 ständig nach oben gedrückt, so daß dieser Ventilteller 22 normalerweise in der Offenposition steht. Anders dagegen die Ventilteller 20, 21, welche den Kopf- bzw. Seitenbrausen zugeordnet sind. Diese sind nicht federbeaufschlagt und haben daher auch keine Vorzugsstellung.

Der Wasserraum 30 zwischen dem oberen Einsatz 5 und dem unteren Einsatz 4 ist durch ein Überdruckventil 57 mit dem Wasserweg 15 verbunden, der mit dem Anschlußnippel 8, also der Handbrause, kommuniziert. Das Überdruckventil 57 öffnet sich, wenn der Druck im Wasserraum 30 einen bestimmten Wert überschreitet, und läßt das dort befindliche Wasser dann in Richtung zum Anschlußnippel 8 abströmen.

Der obere Einsatz 5 sowie die die Betriebsart der Kopfbrause bestimmende Umstelleinrichtung 70 sind von einer flexiblen, geprägten Folie 58 überdeckt, die in Ausnehmungen die Drucktasten 26, 27, 28, 47, 59, 60 sowie die Drucktasten 71, 72 der Umstelleinrichtung 70 aufnimmt. Die Drucktasten 26, 27, 28, 47, 59, 60, 71, 72 können durch die Folie 58 hindurch betätigt werden, wobei diese jeweils in ihre Ausgangsposition zurückkehrt, wie dies den Figuren 3 und 4 zu entnehmen ist. Die geprägte Folie 58 schützt den darunterliegenden Raum vor dem Eindringen von Wasser oder Schmutz.

Die oben beschriebene Umstellvorrichtung arbeitet wie folgt:

Es sei angenommen, daß das dem Anschlußnippel 6 vorgelagerte Mengen- und/oder Mischventil geöffnet ist, so daß also Wasser über den Anschlußnippel 6 in den Zwischenraum zwischen dem unteren Einsatz 4 und der Grundplatte 3 des Gehäuses 2 eintreten und von dort über die Öffnung 29 im unteren Einsatz 4 in den Wasserraum 30 zwischen dem unteren Einsatz 4 und dem oberen Einsatz 5 eintreten kann. Aufgrund der Wirkung der Druckfeder 56 befindet sich der Ventilteller 22 in seiner oberen Offenstellung, so daß das im Wasserraum 30 befindliche Wasser über den Ventilsitz 18 in den Wasserraum 15, zum Anschlußnippel 8 und von dort zur Handbrause fließen kann. Der dem Ventilteller 20 zugeordnete Vorsprung 50 befindet sich am oberen Ende der Ausnehmung 53, wie dies in Figur 5 gezeigt ist.

Die Ventilteller 20, 21 sind in Anlage an den zugeordneten Ventilsitzen 16 bzw. 17, so daß über die Wasserwege 13 und 14 kein Wasser zu den Kopf- bzw. Seitenbrausen fließen kann. Die diesen Ventiltellern 21, 22 zugeordneten, seitlich überstehenden Vorsprünge 51, 52 befinden sich, wie aus Figur 5 hervorgeht, in diesem Zustand an dem linken, unteren Ende der entsprechenden Ausnehmungen 54, 55 der Steuerleiste 56. Eine Vertikalbewegung der Ventilteller 21, 22 wird in dieser Position der Steuerleiste 56 dadurch unterbunden, daß die Vorsprünge 51, 52 jeweils an der Hypothenuse der Ausnehmungen 54, 55 anstoßen.

Um die Ventilteller 21, 22 anheben zu können und damit den Wasserfluß zu den Kopf- und Seitenbrausen freizugeben, ist es erforderlich, zuerst den Ventilteller 20 in Anlage an den zugeordneten Ventilsitz 18 zu bringen. Dies geschieht durch manuellen Druck auf die Drucktaste 28. Liegt der Ventilteller 20 am Ventilsitz 18 an, so verbleibt er dort unter der Wirkung des Drucks des Wassers, das in dem Wasserraum 30 steht.

Die nach unten gerichtete Bewegung des Ventiltellers 20 wird von einer nach unten gerichteten Bewegung des an diesen angesetzten Vorsprungs 50 begleitet, die sich durch eine Nocken- bzw. Kulissenwirkung in eine horizontale, in Figur 5 nach links gerichtete Bewegung der Steuerleiste 56 umsetzt. Am Ende dieser Bewegung befindet sich der Vorsprung 50 am unteren, rechten Ende der Ausnehmung 53. Durch die nach links gerichtete Bewegung der Steuerleiste 56 befinden sich nunmehr die Vorsprünge 51, 52, die den Ventiltellern 21, 22 zugeordnet sind, jeweils am rechten unteren Eck der entsprechenden Ausnehmung 54, 55. Nunmehr ist es möglich, die Ventilteller 21, 22 von den zugeordneten Ventilsitzen 16 bzw. 17 abzuheben; die Vorsprünge 51, 52 gleiten dabei entlang der vertikal stehenden Kathete der Ausnehmungen 54, 55 nach oben.

Die Ventilteller 21, 22 werden dadurch nach oben bewegt, daß auf die in Figur 1 links dargestellten Drucktasten 59, 60, welche auf die Führungsschäfte der Betätigungswippen 38, 39 aufgesetzt sind, ein Druck ausgeübt wird. Die entsprechenden Führungsschäfte der Wippenglieder 38, 39 gleiten in den zugeordneten Führungsbohrungen des oberen Einsatzes 5 nach unten; die Betätigungswippen 38, 39 verschwenken um die zylindrischen Lagervorsprünge in der Sicht der Figur 5 gegen den Uhrzeigersinn, wobei sich die jeweils rechten Enden der Betätigungswippen 38, 39 nach oben bewegen und die Ventilschäfte 24, 25 nach oben ziehen. Hierdurch ist nunmehr der Wasserfluß zu den Kopf- und Seitenbrausen freigegeben, wobei im Fall der Kopfbrausen dieser Wasserfluß zunächst durch die Umstelleinrichtung 70 führt, wo eine Auswahl zwischen zwei weiteren möglichen Strömungswegen erfolgt.

Der Wasserfluß zu den Kopf- und Seitenbrausen bleibt so lange erhalten, bis durch Druck auf die in Figur 1 rechten Drucktasten 61, 62 die entsprechenden Ventilteller 21, 22 wieder an die zugehörigen Ventilsitze 16 bzw. 17 angelegt sind.

Die obige Beschreibung macht deutlich, daß die Kopf- und Seitenbrausen alternativ oder kummulativ betätigt werden können, sofern nur der Wasserweg zur Handbrause verschlossen ist.

Solange die Ventilteller 21, 22 von den Ventilsitzen 17 bzw. 18 abgehoben sind und sich daher die Vorsprünge 51, 52 an den oberen Ecken der Ausnehmungen 54, 55 befinden, ist es auch nicht möglich, den den Wasserstrom zur Handbrause beherrschenden Ventilteller 20 nach oben zu bewegen. Dem widersetzt sich die Form der Ausnehmung 53, an deren unterem Ende sich der Vorsprung 50 befindet. Auch eine Nocken- oder Kulissenwirkung des Vorsprungs 50 innerhalb der Ausnehmung 53 kann hieran nichts ändern: Diese würde versuchen, die Steuerleiste 56 in Figur 5 nach rechts zu verschieben. Dem widersetzen sich aber die Vorsprünge 51, 52, die an den Katheten der dreieckigen Ausnehmungen 54, 55 anliegen.

Soll also erneut die Handbrause in Benutzung genommen werden, ist es erforderlich, zunächst die Ventilteller 21, 22 an die zugeordneten Ventilsitze 16, 17 anzulegen. Bei diesem Vorgang rutschen die Vorsprünge 51, 52 dieser Ventilteller 21, 22 entlang der vertikalen Katheten der Ausnehmungen 54, 55 nach unten. Wenn jetzt der Ventilteller 20 abgehoben und der Wasserstrom zur Handbrause freigegeben wird, kann die vom Vorsprung 50 auf die Ausnehmung 53 ausgeübte Nocken- bzw. Kulissenwirkung eine Horizontalverschiebung der Steuerleiste 56 nach hinten bewirken, bei welcher die Vorsprünge 51, 52 der Ventilteller 21, 22 entlang der horizontalen Katheten der Ausnehmungen 54, 55 nach vorne gleiten. Damit wäre dann der in Figur 5 dargestellte Zustand wieder hergestellt.

Sind alle Ventilteller 20, 21, 22 an die entsprechenden Ventilsitze 16, 17, 18 angelegt und kann daher über die zugeordneten Ventilsitze 16, 17, 18 kein Wasser ausfließen, so könnte sich grundsätzlich innerhalb des Wasserraums 30 zwischen dem unteren Einsatz 4 und dem unteren Einsatz 5 ein so hoher Druck aufbauen, daß die Umstellvorrichtung gefährdet ist. Dem wird durch das Überdruckventil 57 vorgebeugt, das sich bei Erreichen eines gefährlichen Drucks öffnet und Wasser zur Handbrause hin abläßt.

## Patentansprüche

1. Umstellvorrichtung für eine Sanitäreinrichtung mit mindestens zwei Wasserverbrauchern, insbesondere für eine Duscheinrichtung mit mindestens zwei Duschköpfen, mit
a) einem Gehäuse, das einen Einlaß für Wasser und eine der Anzahl der Wasserverbraucher entsprechende Anzahl von Auslässen aufweist;
b) einer im Gehäuse untergebrachten Ventileinrichtung, die wahlweise eine Verbindung zwischen dem Einlaß und einem oder mehrerem der Auslässe herstellen kann;
wobei
c) die Ventileinrichtung eine Mehrzahl von Absperrventilen (16, 20; 17, 21; 18, 22) umfaßt, die einlaßseitig mit dem Einlaß (6) des Gehäuses (2) und auslaßseitig mit jeweils einem Auslaß (7, 8, 9, 10) des Gehäuses (2) kommunizieren und die jeweils einen Ventilkörper (20, 21, 22) aufweisen, der zwischen einer Offen- und einer Schließstellung hin- und herbewegbar ist;
**dadurch gekennzeichnet, daß**
d) ein Steuerkörper (56) vorgesehen ist, der sich entlang aller Absperrventile (16, 20; 17, 21; 18, 22) erstreckt und eine Anzahl von Ausnehmungen (53, 54, 55) aufweist, die der Anzahl der Absperrventile (16, 20; 17, 21; 18, 22) entspricht;
e) jedes Absperrventil (16, 20; 17, 21; 18, 22) einen gemeinsam mit dem Ventilkörper (20, 21, 22) bewegbaren Vorsprung (50, 51, 52) aufweist, der in eine Ausnehmung (53, 54, 55) des Steuerkörpers (56) eingreift,
wobei
f) die Form der Ausnehmung (53, 54, 55) in dem Steuerkörper (56) so gewählt ist, daß mindestens eines der Absperrventile (16, 20; 17, 21; 18, 22) nur dann geöffnet werden kann, wenn mindestens ein anderes der Absperrventile (16, 20; 17, 21; 18, 22) geschlossen ist.

2. Umstellvorrichtung nach Anspruch 1, **dadurch gekennzeichnet, daß** die Ventilkörper (20, 21, 22) eine lineare Bewegung durchführen, daß mindestens eine Ausnehmung (54, 55) des Steuerkörpers (56) die Form eines rechtwinkligen Dreiecks aufweist, dessen eine Kathete parallel zur Bewegungsrichtung der Ventilkörper (20, 21, 22) verläuft, und daß mindestens eine andere Ausnehmung (53) des Steuerkörpers (56) geradlinig ist und sich unter einem von 90° abweichenden Winkel zur Bewegungsrichtung der Ventilkörper (20, (21, 22) erstreckt.

3. Umstellvorrichtung nach Anspruch 1, **dadurch gekennzeichnet, daß** jedes Absperrventil (16, 20; 17, 21; 18, 22) durch eine Betätigungswippe (37, 38, 39) betätigbar ist.

4. Umstellvorrichtung nach einem der vorhergehenden Ansprüche, **dadurch gekennzeichnet, daß** der Innenraum des Gehäuses (2) durch einen Einsatz (4), in dem die Ventilsitze (16, 17, 18) ausgebildet sind, in einen stromauf von den Ventilsitzen (16, 17, 18) liegenden, mit dem Einlaß (6) des Gehäuses (2) kommunizierenden Wasserraum (30) und eine Mehrzahl von stromab von den Ventilsitzen (16, 17, 18) liegenden Wasserwegen (13, 14, 15) unterteilt ist, die jeweils mit einem Auslaß (7, 8, 9, 10) des Gehäuses (2) kommunizieren.

5. Umstellvorrichtung nach Anspruch 4, **dadurch gekennzeichnet, daß** ein Überdruckventil (57) vorgesehen ist, welche den stromauf von den Ventilsitzen (16, 17, 18) liegenden Wasserraum (30) mit einem der stromabliegenden Wasserwege (15) verbindet, wenn der Druck in dem Wasserraum (30) einen bestimmten Wert überschreitet.

6. Umstellvorrichtung nach einem der vorhergehenden Ansprüche, bei welchem einer der Wasserverbraucher eine Handbrause ist, **dadurch gekennzeichnet, daß** der den Wasserfluß zur Handbrause steuernde Ventilkörper (22) durch eine Feder (56) in die Offenstellung gedrückt wird.

## Claims

1. Reversing device for a sanitary installation having at least two water consumers, particularly for a shower installation with at least two shower heads, having
a) a housing which has an inlet for water and a number of outlets corresponding to the number of water consumers;
b) a valve device which is accommodated in the housing and can optionally form a connection between the inlet and one or more of the outlets;
in which
c) the valve device comprises a plurality of cut-off valves (16, 20; 17, 21; 18, 22) which communicate on the inlet side with the inlet (6) of the housing (2) and on the outlet side with a respective outlet (7, 8, 9, 10) of the housing (2) and which each have a valve body (20, 21, 22) which can be moved back and forth between an open and a closed position;
**characterised in that**
d) a control body (56) is provided, which extends along all cut-off valves (16, 20; 17, 21; 18, 22) and has a number of cutouts (53, 54, 55) which corresponds to the number of cut-off valves (16, 20; 17, 21; 18, 22);
e) each cut-off valve (16, 20; 17, 21; 18, 22) has a projection (50, 51, 52) which can be moved together with the valve body (20, 21, 22) and engages in a cutout (53, 54, 55) of the control body (56);
in which
f) the shape of the cutout (53, 54, 55) in the control body (56) is selected such that at least one of the cut-off valves (16, 20; 17, 21; 18, 22) can only be opened if at least another one of the cut-off valves (16, 20; 17, 21; 18, 22) is closed.

2. Reversing device according to Claim 1, **characterised in that** the valve bodies (20, 21, 22) carry out a linear movement, **in that** at least one cutout (54, 55) of the control body (56) is in the shape of a right-angled triangle whereof one cathetus extends parallel to the movement direction of the valve bodies (20, 21, 22), and **in that** at least one other cutout (53) of the control body (56) is linear and extends at an angle other than 90° to the movement direction of the valve bodies (20, 21, 22).

3. Reversing device according to Claim 1, **characterised in that** each cut-off valve (16, 20; 17, 21; 18, 22) can be actuated by an actuating rocker (37, 38, 39).

4. Reversing device according to one of the preceding claims, **characterised in that** an insert (4), in which the valve seats (16, 17, 18) are constructed, sub-divides the inside of the housing (2) into a water chamber (30), which is located upstream of the valve seats (16, 17, 18) and communicates with the inlet (6) of the housing (2), and a plurality of waterways (13, 14, 15) which are located downstream of the valve seats (16, 17, 18) and each communicate with an outlet (7, 8, 9, 10) of the housing (2).

5. Reversing device according to Claim 4, **characterised in that** a pressure relief valve (57) is provided, which connects the water chamber (30) located upstream of the valve seats (16, 17, 18) to one of the waterways (15) located downstream when the pressure in the water chamber (30) exceeds a particular value.

6. Reversing device according to one of the preceding claims, in which one of the water consumers is a hand shower, **characterised in that** the valve body (22) controlling the flow of water to the hand shower is pressed into the open position by a spring (56).

## Revendications

1. Dispositif de commutation pour un équipement sanitaire doté d'au moins deux postes utilisateurs d'eau, notamment pour un dispositif de douche doté d'au moins deux têtes de douche, avec
a) un boîtier qui présente une admission pour l'eau et un nombre de sorties correspondant au nombre de postes utilisateurs d'eau ;
b) un ensemble de soupapes logé dans le boîtier, qui permet de réaliser sélectivement une liaison entre l'admission et une ou plusieurs des sorties ;
c) sachant que l'ensemble de soupapes comprend une pluralité de soupapes d'arrêt (16, 20 ; 17, 21 ; 18, 22) qui communiquent du côté d'admission avec l'admission (6) du boîtier (2) et du côté de sortie avec une sortie respective (7, 8, 9, 10) du boîtier (2), et qui présentent chacune un corps de soupape (20, 21, 22) qui peut être déplacé en va-et-vient entre une position ouverte et une position fermée :
**caractérisé en ce que**
d) il est prévu un corps de commande (56) qui s'étend le long de toutes les soupapes d'arrêt (16, 20 ; 17, 21 ; 18, 22) et qui présente un nombre d'évidements (53, 54, 55) qui correspond au nombre de soupapes d'arrêt (16, 20 ; 17, 21 ; 18, 22) ;
e) chaque soupape d'arrêt (16, 20 ; 17, 21 ; 18, 22) présente une saillie (50, 51, 52) mobile conjointement avec le corps de soupape (20, 21, 22), laquelle s'engage dans un évidement (53, 54, 55) du corps de commande (56),
f) sachant que la forme de l'évidement (53, 54, 55) dans le corps de commande (56) est choisie de telle sorte qu'au moins une des soupapes d'arrêt (16, 20 ; 17, 21 ; 18, 22) ne peut être ouverte que si au moins une autre des soupapes d'arrêt (16, 20 ; 17, 21 ; 18, 22) est fermée.

2. Dispositif de commutation selon la revendication 1, **caractérisé en ce que** les corps de soupape (20, 21, 22) accomplissent un mouvement linéaire, **en ce qu'**au moins un évidement (54, 55) du corps de commande (56) possède la forme d'un triangle rectangle dont un côté de l'angle droit s'étend parallèlement à la direction de déplacement des corps de soupape (20, 21, 22), et **en ce qu'**au moins un autre évidement (53) du corps de commande (56) est rectiligne et s'étend sous un angle différent de 90° par rapport à la direction de déplacement des corps de soupape (20, 21, 22).

3. Dispositif de commutation selon la revendication 1, **caractérisé en ce que** chaque soupape d'arrêt (16, 20 ; 17, 21 ; 18, 22) peut être actionnée par une bascule d'actionnement (37, 38, 39).

4. Dispositif de commutation selon l'une des revendications précédentes, **caractérisé en ce que** l'espace intérieur du boîtier (2) est subdivisé, par une pièce d'insertion (4) dans laquelle sont formés les sièges de soupape (16, 17, 18), en un compartiment d'eau (30), situé en amont des sièges de soupape (16, 17, 18) et communiquant avec l'admission (6) du boîtier (2), et une pluralité de voies d'eau (13, 14, 15) situées en aval des sièges de soupape (16, 17, 18) et communiquant avec une sortie respective (7, 8, 9, 10) du boîtier (2).

5. Dispositif de commutation selon la revendication 4, **caractérisé en ce qu'**il est prévu une soupape de surpression (57) qui relie le compartiment d'eau (30) situé en amont des sièges de soupape (16, 17, 18) avec une des voies d'eau (15) situées en aval si la pression dans le compartiment d'eau (30) dépasse une valeur donnée.

6. Dispositif de commutation selon l'une des revendications précédentes, selon lequel un des postes utilisateurs d'eau est une douchette, **caractérisé en ce que** le corps de soupape (22) commandant l'écoulement d'eau vers la douchette est pressé par un ressort (56) dans la position ouverte.
